# EUROPEAN PATENT APPLICATION

(11) **EP 4 283 772 A1**
(43) Date of publication of application: **29.11.2023**
(21) Application number: 22742500.6
(22) Date of filing: 14.01.2022
(51) Int. Cl.: H01M 50/342, H01M 50/152

(54) **CYLINDRICAL BATTERY**

(30) Priority: 21.01.2021 JP 2021008020
(71) Applicant: Panasonic Energy Co., Ltd., Osaka 570-8511 (JP)
(72) Inventor: YAMASHITA, Keisuke, Kadoma-shi, Osaka (JP)
(74) Representative: Novagraaf International SA
(86) International application number: PCT/JP2022/001036
(87) International publication number: WO 2022/158378

(57) **Abstract**

A seal plate (27) of a cylindrical battery (10) has an outer peripheral portion (27b), which is at least partly fixed to an opening of an outer can (16), and an annular thin portion (27c) adjacent to the outer peripheral portion (27b). The thin portion (27c) has a sloping portion (56) sloping radially inward toward the bottom of the outer can (16) in an axial direction. In a cross section of the thin portion (27c) taken in a plane including the radial direction and the axial direction, an inner surface of an adjacent portion (59) adjacent to the outer peripheral portion (27b) of the thin portion (27c) has a curved shape, and the gradient of an outer surface (70) of the thin portion (27c) changes towards the outer peripheral portion (27b) so as to decrease the thickness of the adjacent portion (59).

## Description

### TECHNICAL FIELD

The present disclosure relates to a cylindrical battery.

### BACKGROUND ART

PATENT LITERATURE 1 discloses a conventional cylindrical battery. This cylindrical battery comprises a sealing assembly having a sealing plate, a metal plate as an internal terminal plate, and an insulating member interposed between the sealing plate and the metal plate. In the cylindrical battery, the inside is hermetically sealed by the sealing assembly being crimped and fixed to the opening of a bottomed cylindrical exterior can via a resin-made gasket. On the sealing plate of the cylindrical battery, there is provided an inclined portion that is displaced outward in the axial direction and the thickness of which is continuously decreasing as going from the inner periphery to the outer periphery in the radial direction. This cylindrical battery operates a safety mechanism when its internal pressure rises due to abnormal heat generation. In detail, when the internal pressure of the cylindrical battery rises due to abnormal heat generation thereof, the inclined portion is inverted to disconnect the current path inside the battery. Moreover, when the internal pressure further rises, the inclined portion ruptures to allow gas inside the battery to be discharged to the outside.

### CITATION LIST

### PATENT LITERATURE

PATENT LITERATURE 1: International Publication No. WO 2016/157749

### SUMMARY

### TECHNICAL PROBLEM

In the cylindrical battery of PATENT LITERATURE 1, the sealing plate is arranged at the outermost portion of the sealing assembly and functions as an external terminal. To the external terminal, an external lead is electrically connected when a plurality of cylindrical batteries form a module. The external terminal however is occasionally hardly electrically connected to the external lead since in the aforementioned cylindrical battery, an inner periphery of the upper surface of the sealing plate is recessed more to the inner side of the battery than the shoulder portion of the bottomed exterior can. In such circumstances, when in order to facilitate the electrical connection of the external terminal and the external lead, there is provided a convex portion that protrudes to the outer side of the battery at the center portion of the sealing plate in the radial direction, there arises a concern that the convex portion causes inversion or rupturing of the sealing assembly to hardly occur and a variation in inversion pressure or ventilation pressure (rupturing pressure) to be large. Such variations of the inversion pressure and the ventilation pressure are preferably reduced regardless of providing the convex portion on the sealing plate or not.

It is therefore an advantage of the present disclosure to provide a cylindrical battery capable of reducing variation(s) in inversion pressure and/or ventilation pressure of a sealing assembly.

### SOLUTION TO PROBLEM

In order to solve the aforementioned problem, there is provided a cylindrical battery according to the present disclosure, comprising: a bottomed tubular exterior can; and a sealing assembly closing an opening of the exterior can, wherein the sealing assembly includes a sealing plate that discharges gas inside to an outside by rupturing, the sealing plate has: an outer peripheral portion at least part of which is crimped and fixed to the opening of the exterior can; and an annular thin portion adjacent to the outer peripheral portion, the thin portion has an inclined portion that is inclined to a bottom side of the exterior can in an axial direction as going inward in a radial direction, and in a cross section of the thin portion as cut along a plane including the radial direction and the axial direction, an inner surface of an adjacent portion, of the thin portion, that is adjacent to the outer peripheral portion has a curved surface, and a gradient of an outer surface of the thin portion changes toward the outer peripheral portion such that a thickness of the adjacent portion is small.

Notably, in the aforementioned cross section, the aforementioned outer surface may have a shape of connected lines formed by connecting two or more straight lines having different gradients, or otherwise, may include a curved line. Herein, when the aforementioned outer surface includes a portion of the shape of connected lines in the aforementioned cross section, the gradient of the outer surface at the connection point of the connected lines is defined as the same gradient as the gradient of the straight line, of the two straight lines, that is positioned on the inner side in the radial direction. Moreover, when the aforementioned outer surface includes a curved line in the aforementioned cross section, the gradient of the outer surface at the place of the curved line is defined as the gradient of the tangential line to the curved line.

### ADVANTAGEOUS EFFECTS OF INVENTION

According to the cylindrical battery according to the present disclosure, variation(s) in inversion pressure and/or ventilation pressure of the sealing assembly may be reduced.

### BRIEF DESCRIPTION OF DRAWINGS

FIG. 1 is an axial directional cross sectional view of a cylindrical battery according to an embodiment of the present disclosure.
FIG. 2 is a perspective view of an electrode assembly of the aforementioned cylindrical battery.
FIG. 3 is an expanded cross sectional view about the periphery of the sealing assembly of the aforementioned cylindrical battery.
FIG. 4 is a cross sectional view of a cylindrical battery of a modification corresponding to FIG. 1.
FIG. 5A is a cross sectional view of the aforementioned sealing plate along the axial direction, being a cross sectional view of the sealing plate as cut along a plane including the axial direction and the radial direction.
FIG. 5B is an expanded view of an R1 region in FIG. 5A.
FIG. 6A is a cross sectional view of a sealing plate of a comparative example corresponding to FIG. 4A.
FIG. 6B is an expanded view of an R2 region in FIG. 6A.
FIG. 7 is a schematic diagram for describing the summary of a measurement method of an inversion pressure and a ventilation pressure of a sealing plate.

### DESCRIPTION OF EMBODIMENTS

Hereafter, embodiments of a cylindrical battery according to the present disclosure will be described in detail with reference to the drawings. Notably, the cylindrical battery of the present disclosure may be a primary battery or may be a secondary battery. Otherwise, it may be a battery using an aqueous electrolyte or may be a battery using a non-aqueous electrolyte. While there is hereafter exemplarily illustrated, as a cylindrical battery 10 which is one of the embodiments, a non-aqueous electrolyte secondary battery (lithium ion battery) using a non-aqueous electrolyte, the cylindrical battery of the present disclosure is not limited to this.

It is originally supposed from the first that, when a plurality of embodiments, modifications, and the like are included below, characteristic portions of these be properly combined to configure a new embodiment. For embodiments below, the same configurations are given the same signs in the drawings and their duplicate description is omitted. Moreover, the plurality of drawings include schematic diagrams, and dimension ratios between lengths, depths, heights, and the like of components do not necessarily coincide between different diagrams. The axial direction of the cylindrical battery 10 coinciding with the height direction of the cylindrical battery 10, for convenience of description, a sealing assembly 17 side in the axial direction is regarded as being on the "upside", and a bottom side of an exterior can 16 in the axial direction is regarded as being on the "downside". Out of the constituents described below, constituents that are not disclosed in the independent claim(s), showing the most generic concept, are optional constituents, not the essential constituents.

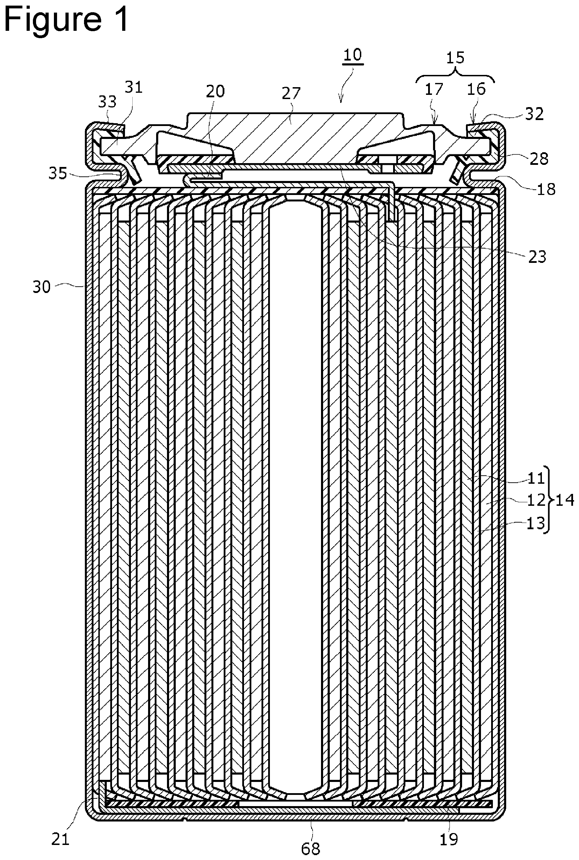

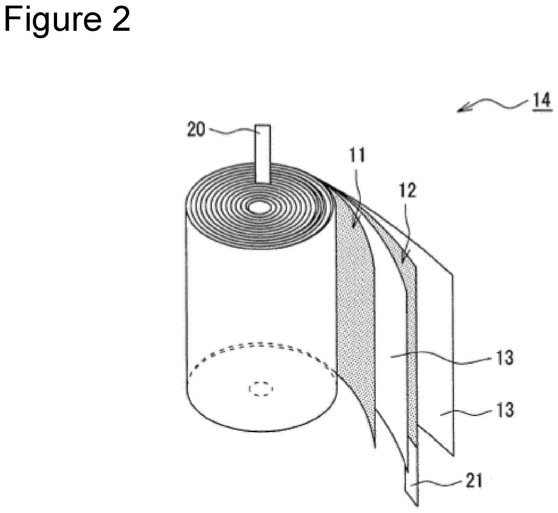

FIG. 1 is an axial directional cross sectional view of the cylindrical battery 10 according to an embodiment of the present disclosure, and FIG. 2 is a perspective view of an electrode assembly 14 of the cylindrical battery 10. As shown in FIG. 1, the cylindrical battery 10 comprises a winding-type electrode assembly 14, a non-aqueous electrolyte (not shown), and a battery case 15 housing the electrode assembly 14 and the non-aqueous electrolyte. As shown in FIG. 2, the electrode assembly 14 includes a positive electrode 11, a negative electrode 12, and separators 13 interposed between the positive electrode 11 and the negative electrode 12, and has a winding structure having the positive electrode 11 and the negative electrode 12 wound via the separators 13. The battery case 15 is constituted of a bottomed tubular exterior can 16 and the sealing assembly 17 closing the opening of the exterior can 16. Moreover, the cylindrical battery 10 comprises a resin-made gasket 28 arranged between the exterior can 16 and the sealing assembly 17.

The non-aqueous electrolyte includes a non-aqueous solvent and an electrolyte salt dissolved in the non-aqueous solvent. For the non-aqueous solvent, there may be used, for example, esters, ethers, nitriles, amides, a mixed solvent of two or more of these, and the like. The non-aqueous solvent may contain a halogen-substituted substance having halogen atom(s) such as fluorine substituted for at least one or some of hydrogen atoms of these solvents. Notably, the non-aqueous electrolyte is not limited to a liquid electrolyte but may be a solid electrolyte using a gelatinous polymer or the like. For the electrolyte salt, a lithium salt such as LiPF₆ is used.

As shown in FIG. 2, the electrode assembly 14 has the long strip-shaped positive electrode 11, the long strip-shaped negative electrode 12, and the two long strip-shaped separators 13. Moreover, the electrode assembly 14 has a positive electrode lead 20 joined to the positive electrode 11 and a negative electrode lead 21 joined to the negative electrode 12. The negative electrode 12 is formed to have a certain size larger than the positive electrode 11 in order to restrain lithium from precipitating, and is formed to be longer than the positive electrode 11 in the longitudinal direction and the width direction (transverse direction). Moreover, the two separators 13 are formed to have a certain size larger at least than the positive electrode 11 and, for example, are arranged so as to interpose the positive electrode 11.

The positive electrode 11 has a positive electrode current collector and positive electrode mixture layers formed on both surfaces of the current collector. For the positive electrode current collector, there can be used foil of a metal, such as aluminum or aluminum alloy, that is stable in the potential range of the positive electrode 11, a film having the metal disposed on its surface layers, and the like. The positive electrode mixture layers include a positive electrode active material, a conductive agent, and a binder agent. The positive electrode 11 can be produced, for example, by applying, on the positive electrode current collector, positive electrode mixture slurry including the positive electrode active material, the conductive agent, the binder agent, and the like, drying and afterward compressing the coating film to form the positive electrode mixture layers on both surfaces of the current collector.

The positive electrode active material is composed of a lithium-containing metal composite oxide as a main component. Examples of metal element(s) contained in the lithium-containing metal composite oxide include Ni, Co, Mn, Al, B, Mg, Ti, V, Cr, Fe, Cu, Zn, Ga, Sr, Zr, Nb, In, Sn, Ta, W, and the like. A preferable example of the lithium-containing metal composite oxide is a composite oxide containing at least one of the group consisting of Ni, Co, Mn, and Al.

Examples of the conductive agent included in the positive electrode mixture layers can include carbon materials such as carbon black, acetylene black, Ketjen black, and graphite. Examples of the binder agent included in the positive electrode mixture layers can include fluorine resins such as polytetrafluoroethylene (PTFE) and polyvinylidene fluoride (PVdF), polyacrylonitrile (PAN), polyimide resins, acrylic resins, polyolefin resins, and the like. There may be used, together with these resins, a cellulose derivative such as carboxymethylcellulose (CMC) or its salt, polyethylene oxide (PEO), or the like.

The negative electrode 12 has a negative electrode current collector and negative electrode mixture layers formed on both surfaces of the current collector. For the negative electrode current collector, there can be used foil of a metal, such as copper or copper alloy, that is stable in the potential range of the negative electrode 12, a film having the metal disposed on its surface layers, and the like. The negative electrode mixture layers include a negative electrode active material and a binder agent. The negative electrode 12 can be produced, for example, by applying, on the negative electrode current collector, negative electrode mixture slurry including the negative electrode active material, the binder agent, and the like, drying and afterward compressing the coating film to form the negative electrode mixture layers on both surfaces of the current collector.

For the negative electrode active material, there is generally used a carbon material that reversibly stores and releases lithium ions. Preferably examples of the carbon material include graphite such as natural graphite such as flaky graphite, massive graphite, and earthy graphite and artificial graphite such as massive artificial graphite and graphitized mesophase carbon microbeads. In the negative electrode mixture layers, there may be included, as the negative electrode active material, a Si material containing silicon (Si). Moreover, for the negative electrode active material, there may be used a metal, other than Si, that is alloyed with lithium, an alloy containing the metal, a compound containing the metal, and the like.

While for the binder agent included in the negative electrode mixture layers, there may be used fluorine resins, PAN, polyimide resins, acrylic resins, polyolefin resins, and the like as in the case of the positive electrode 11, there is preferably used styrenebutadiene rubber (SBR) or its modified substance. In the negative electrode mixture layers, for example, in addition to SBR or the like, there may be included CMC or its salt, polyacrylic acid (PAA) or its salt, polyvinyl alcohol, and/or the like.

For the separators 13, there are used porous sheets having ion permeability and insulation ability. Specific examples of the porous sheet include a microporous thin film, woven fabric, nonwoven fabric, and the like. Preferable materials for the separators 13 are polyolefin resins such as polyethylene and polypropylene, cellulose, and the like. Each separator 13 may have any of a single layer structure and a laminate structure. A heat resistant layer and/or the like may be formed on a surface of the separator 13. Notably, while the negative electrode 12 may form the winding starting end of the electrode assembly 14, the separators 13 generally extend beyond the end of the negative electrode 12 on the winding starting side, the ends of the separators 13 on the winding starting side forming the winding starting end of the electrode assembly 14.

In the example shown in FIG. 1 and FIG. 2, the positive electrode lead 20 is electrically connected to an intermediate portion such as the center portion of the positive electrode core in the winding direction, and the negative electrode lead 21 is electrically connected to the winding finishing end of the negative electrode core in the winding direction. Nevertheless, the negative electrode lead may be electrically connected to the winding starting end of the negative electrode core in the winding direction. Otherwise, the electrode assembly may have two negative electrode leads, one of the negative electrode leads being electrically connected to the winding starting end of the negative electrode core in the winding direction, the other of the negative electrode leads being electrically connected to the winding finishing end of the negative electrode core in the winding direction. Otherwise, the negative electrode and the exterior can may be electrically connected by the end, of the negative electrode core, on the winding finishing side in the winding direction being brought into contact with an inner surface of the exterior can.

As shown in FIG. 1, the cylindrical battery 10 further has an insulating plate 18 arranged on an upper side of the electrode assembly 14 and an insulating plate 19 arranged on a lower side of the electrode assembly 14. In the example shown in FIG. 1, the positive electrode lead 20 attached to the positive electrode 11 extends to the sealing assembly 17 side through a through hole of the insulating plate 18, and the negative electrode lead 21 attached to the negative electrode 12 extends to a bottom 68 side of the exterior can 16 through the outside of the insulating plate 19. The positive electrode lead 20 is connected to a lower surface of a terminal plate 23 which is a bottom plate of the sealing assembly 17 by welding or the like, and a sealing plate 27 which is a top board of the sealing assembly 17 electrically connected to the terminal plate 23 works as a positive electrode terminal. Moreover, the negative electrode lead 21 is connected to an inner surface of the bottom 68 of the exterior can 16 by welding or the like, and the exterior can 16 works as a negative electrode terminal.

The exterior can 16 is a metal-made container having a bottomed tubular portion. By hermetical sealing between the exterior can 16 and the sealing assembly 17 with the annular gasket 28, the inner space of the battery case 15 is hermetically sealed. Moreover, the gasket 28 includes a pinched portion 32 pinched and held by the exterior can 16 and the sealing assembly 17 and insulates the sealing assembly 17 from the exterior can 16. The gasket 28 has a role as a sealing material for holding gastightness inside the battery and a role as an insulating material which prevents short circuit between the exterior can 16 and the sealing assembly 17.

The exterior can 16 has an annular grooved portion 35 on a part of its cylindrical outer peripheral surface in the height direction. The grooved portion 35 can be formed, for example, by performing spinning processing inward in the radial direction on a part of the cylindrical outer peripheral surface to recess it inward in the radial direction. The exterior can 16 has a bottomed tubular portion 30 including the grooved portion 35 and an annular shoulder portion 33. The bottomed tubular portion 30 houses the electrode assembly 14 and the non-aqueous electrolyte, and the shoulder portion 33 is folded inward in the radial direction from the end on the opening side of the bottomed tubular portion 30 to extend inward. The shoulder portion 33 is formed when an upper end of the exterior can 16 is folded inward and crimped onto a peripheral edge 31 of the sealing assembly 17. The sealing assembly 17 is pinched and held by the shoulder portion 33 and the grooved portion 35 via the gasket 28 through this crimping and is fixed to the exterior can 16.

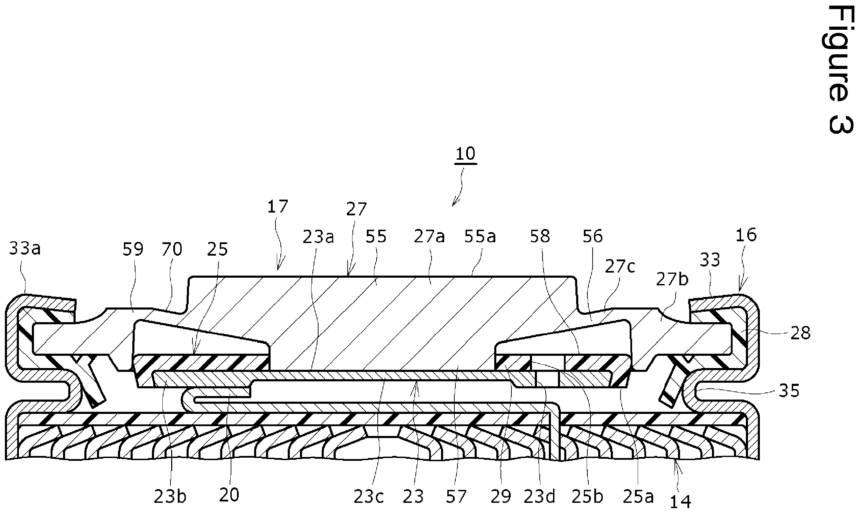

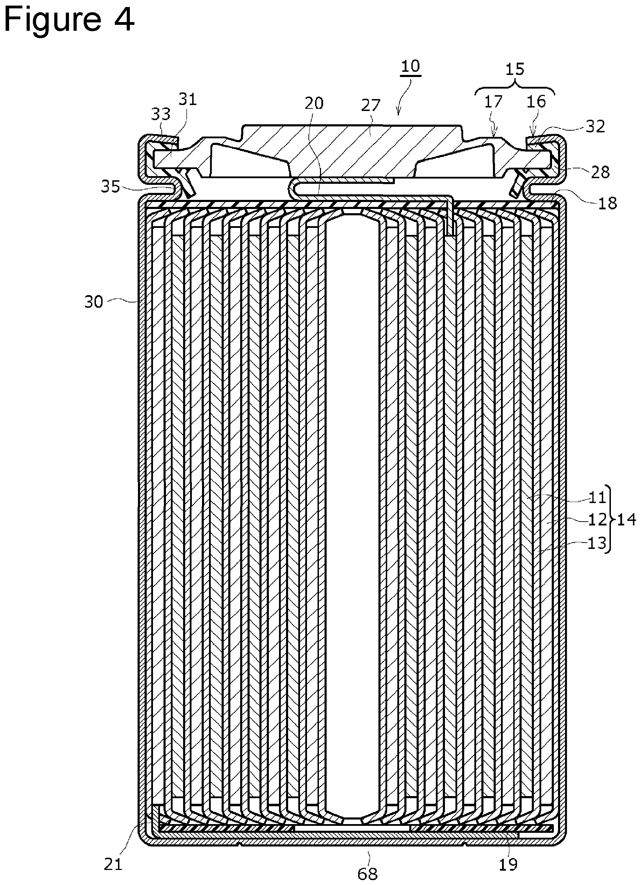

Next, a structure of, a current interruption operation with, and a gas discharging operation with the sealing assembly 17 are described. FIG. 3 is an expanded cross sectional view about the periphery of the sealing assembly of the cylindrical battery 10. As shown in FIG. 3, the sealing assembly 17 has a structure having the terminal plate 23, an annular insulating plate 25, and the sealing plate 27 laminated in the order from the electrode assembly 14 side. Each of components constituting the sealing assembly 17 has a disc shape or a ring shape, and the components other than the insulating plate 25 are electrically connected. The terminal plate 23 forms a bottom plate of the sealing assembly 17, and has a circular upper surface 23a positioned on substantially the same plane. The terminal plate 23 has an annular thick portion 23b positioned on its outer side in the radial direction, and a disc-shaped thin portion 23c that connects to the annular end, of the thick portion 23b, on the inner side in the radial direction and is thinner than the thick portion 23b. The positive electrode lead 20 is connected to a lower surface of the thick portion 23b of the terminal plate 23 by welding or the like. The sealing assembly 17 may be constituted only of the sealing plate 27. In this case, as shown in FIG. 4, the positive electrode lead 20 is connected to the sealing plate 27.

The sealing plate 27 is circular in plan view. The sealing plate 27 can be produced, for example, by pressing a plate material of aluminum or aluminum alloy. Since aluminum and aluminum alloy have excellent flexibility, they are preferably materials for the sealing plate 27 which functions as an explosion proof valve. The sealing plate 27 has a center portion 27a positioned at the center in the radial direction, an annular outer peripheral portion 27b positioned on the outer side in the radial direction, and a thin portion 27c connecting the center portion 27a and the outer peripheral portion 27b. A center portion of the lower surface of the center portion 27a has a substantially circular shape in plan view and spreads in directions substantially perpendicular to the height direction. An upper surface of the thin portion 23c of the terminal plate 23 and the center portion of the lower surface of the center portion 27a of the sealing plate 27 are joined by metallurgical joining such, for example, as laser welding. When the terminal plate 23 is formed of aluminum or aluminum alloy as with the sealing plate 27, the sealing plate 27 and the terminal plate 23 can be readily joined.

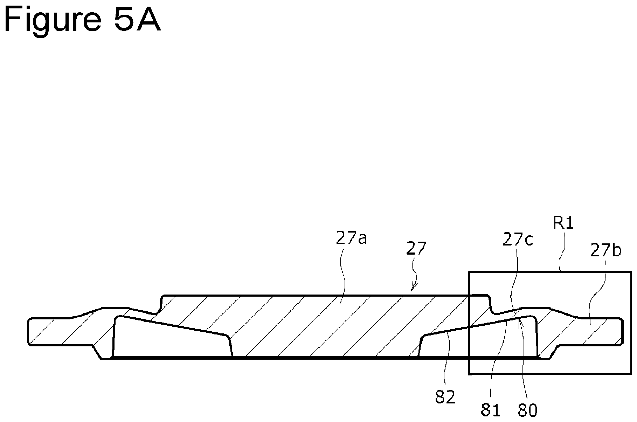

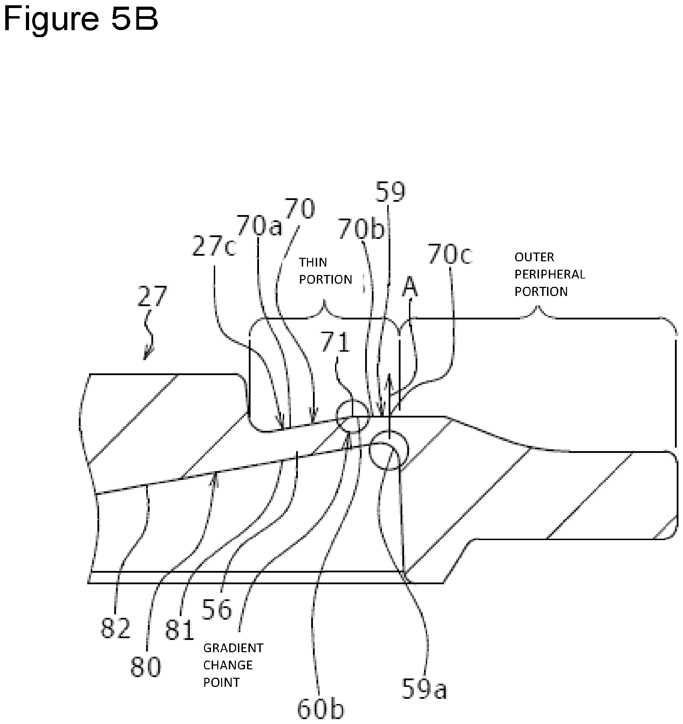

The center portion 27a has a convex portion 55 that connects to the end, of the thin portion 27c, on the inner side in the radial direction and protrudes outward in the axial direction (upward in the height direction) from the end. A top surface 55a of the convex portion 55 is positioned more outward in the axial direction than a place 33a that is positioned most outward in the axial direction within the shoulder portion 33. As to the outer peripheral portion 27b of the sealing plate 27, its end on the outer periphery side is pinched and held by the shoulder portion 33 and the grooved portion 35 via the gasket 28. Thereby, the sealing plate 27 is fixed to the opening of the exterior can 16. A thickness of the thin portion 27c in the axial direction is smaller than a thickness of the outer peripheral portion 27b in the axial direction, and is smaller than a thickness of the center portion 27a in the axial direction. The thin portion 27c has an inclined portion 56 that is inclined downward in the axial direction as going inward in the radial direction inward in the radial direction. An axial directional thickness of an annular adjacent portion 59, of the thin portion 27c, that is adjacent to the outer peripheral portion 27b is smaller than thicknesses of the other portions of the thin portion 27c in the axial direction. A shape of the thin portion 27c is described in detail later using FIG. 5A and FIG. 5B.

The sealing plate 27 has a protruding portion 57 protruding downward at the lower end in the axial direction. The insulating plate 25 is press fitted and fixed onto an outer peripheral surface 29 of the protruding portion 57. The insulating plate 25 has, on the outer side in the radial direction, an annular protruding portion 25a bent downward in the height direction, and the thick portion 23b of the terminal plate 23 is press fitted and fixed, for example, onto an inner peripheral surface of the annular protruding portion 25a. The insulating plate 25 is provided for securing insulation ability to prevent the thick portion 23b of the terminal plate 23 from being electrically connected to the sealing plate 27.

The insulating plate 25 is preferably composed of a material that does not affect battery characteristics. Examples of the material of the insulating plate 25 include polymer resins and, for example, can include a polypropylene (PP) resin and a polybutylene terephthalate (PBT) resin. An outer peripheral surface of the insulating plate 25 comes into contact with an inner peripheral surface, of the outer peripheral portion 27b of the sealing plate 27, that is positioned on the lower side in the axial direction. An annular space 58 is defined by a part, of the lower surface of the sealing plate 27, that includes the lower surface of the thin portion 27c and the upper surface of the insulating plate 25 together. The insulating plate 25 has one or more vent holes 25b that penetrate in the axial direction and communicate with the space 58, and the terminal plate 23 has one or more vent holes 23d that penetrate in the axial direction and communicate with the vent hole(s) 25b.

With the configuration above, when abnormal heat generation of the cylindrical battery 10 occurs and an internal pressure of the cylindrical battery 10 reaches a predetermined value, the sealing assembly 17 performs the current interruption operation and the gas discharging operation as follows. In detail, when the internal pressure of the cylindrical battery 10 reaches the predetermined value, the center portion 27a and the thin portion 27c of the sealing plate 27 are inverted upward in the axial direction with the annular adjacent portion 59 which has a small thickness and low rigidity in the thin portion 27c being as a fulcrum. Simultaneously with the inversion, the thin portion 23c of the terminal plate 23 ruptures to cut off a portion thereof that is connected to the sealing plate 27 from the terminal plate 23, or a welding portion between the terminal plate 23 and the sealing plate 27 is taken apart. This operation disconnects the current path between the terminal plate 23 and the sealing plate 27. When the internal pressure further rises, the adjacent portion 59 of the thin portion 27c ruptures and gas inside the battery is discharged to the outside through the vent hole(s) 23d and the vent hole(s) 25b from the portion where the sealing plate 27 ruptures. Thereby, even when the internal pressure of the cylindrical battery 10 rises, the battery is prevented from blowing up, which can restrain the influence on a device having the cylindrical battery 10 mounted to improve safety. The thin portion 27c of the sealing plate works as a rupturing portion that is to rupture and thereby discharge the gas inside to the outside.

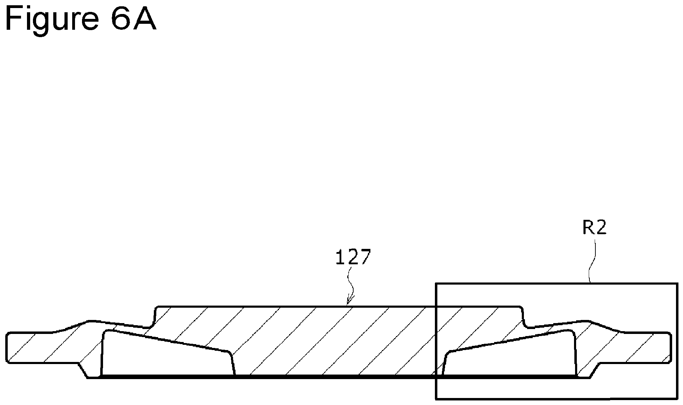

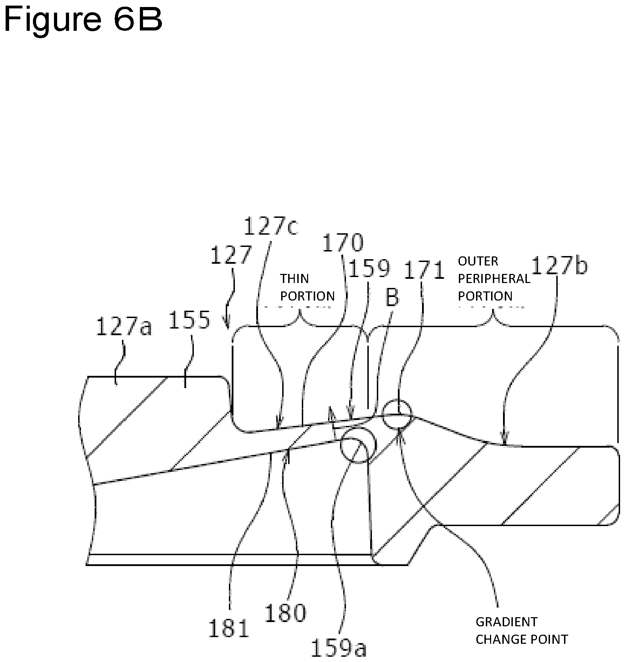

Next, a detailed structure of the thin portion 27c of the sealing plate 27 is described, and by comparing the sealing plate 27 with a sealing plate 127 of a comparative example (refer to FIG. 6A and FIG. 6B), effects which the cylindrical battery 10 employing this thin portion 27c can obtain are described.

FIG. 5A is a cross sectional view of the aforementioned sealing plate 27 along the axial direction, being a cross sectional view of the sealing plate 27 as cut along a plane including the axial direction and the radial direction. Moreover, FIG. 5B is an expanded view of an R1 region in FIG. 5A, showing a portion, of the sealing plate 27, that is on the outer side in the radial direction. As shown in FIG. 5B, the thin portion 27c has the annular adjacent portion 59 adjacent to the outer peripheral portion 27b, and an inner surface of the adjacent portion 59 has a curved shape. Namely, the inner surface of the adjacent portion 59 is an annular curved surface 59a. Moreover, as shown in FIG. 5B, a gradient of an outer surface 70 of the thin portion 27c changes toward the outer peripheral portion 27b such that the thickness of the adjacent portion 59 in the axial direction is small.

More in detail, as shown in FIG. 5B, the outer surface 70 of the thin portion 27c includes a conical inner peripheral surface 70a that is displaced outward in the axial direction as going outward in the radial direction, and an annular flat surface 70b that connects to the end, of the conical inner peripheral surface 70a, that is on the outer side in the radial direction and that spreads in directions substantially perpendicular to the axial direction. The conical inner peripheral surface 70a is positioned more inward in the radial direction than the adjacent portion 59. An opposite surface 70c, of the outer surface 70, that is opposite to the curved surface 59a in the axial direction is included in the flat surface 70b. The opposite surface 70c corresponds to an outer surface of the adjacent portion 59.

In other words, as shown in FIG. 5B, the outer surface 70 has a shape of connected lines and includes a first straight portion 60a that is displaced outward in the axial direction as going outward in the radial direction, and a second straight portion 60b that extends in directions substantially perpendicular to the axial direction from an outer end 71, of the first straight portion 60a, that is on the outer side in the radial direction. The outer end 71 is positioned inward of the adjacent portion 59 in the radial direction. At the boundary of the outer end 71 as a gradient change point, the gradient of the outer surface 70 of the thin portion 27c changes such that the thickness of the adjacent portion 59 in the axial direction is small. The outer surface 70 of the thin portion 27c is inclined toward an inner surface 80 side of the thin portion 27c when going from the inner side to the outer side in the radial direction.

The inner surface 80 of the thin portion 27c includes the aforementioned curved surface 59a and an annular inclined surface 81 that connects to the end, of the curved surface 59a, that is on the inner side in the radial direction. The inclined surface 81 is a conical outer peripheral surface that is displaced downward in the axial direction as going inward in the radial direction. As shown in FIG. 5A, the lower surface of the center portion 27a has, on its outer side in the radial direction, a conical outer peripheral surface portion 82 that connects to the inclined surface 81 and is positioned on the same conical outer peripheral surface as the inclined surface 81. Notably, as shown in FIG. 5B, in the present embodiment, the conical inner peripheral surface 70a is substantially parallel to the inclined surface 81, and the thickness of the inclined portion 56 in the axial direction is substantially constant regardless of the position thereon in the radial direction. Nevertheless, the axial directional thickness of the inclined portion that is positioned on the inner side of the thin portion in the radial direction may be gradually larger as going more inward in the radial direction.

### EXAMPLES

Hereafter, a sealing assembly of an example, a sealing assembly of a comparative example, and a test method are described.

### [Sealing Assembly of Example]

As a sealing assembly of an example, there was used the sealing plate 27 having been described in detail using FIG. 5A and FIG. 5B, that is, a sealing plate that as shown in FIG. 5B, the gradient of the outer surface 70 of the thin portion 27c changes such that the thickness of the adjacent portion 59 in the axial direction is being smaller toward the outer peripheral portion 27b.

### [Sealing Assembly of Comparative Example]

As a sealing assembly of a comparative example, there was used a sealing plate 127 shown in FIG. 6A and FIG. 6B. FIG. 6A is a cross sectional view of the sealing plate 127 of the comparative example corresponding to FIG. 6A, and FIG. 6B is an expanded view of an R2 region in FIG. 6A, showing a portion, of the sealing plate 127 of the comparative example, that is on the outer side in the radial direction. As shown in FIG. 6B, the sealing plate 127 is different from the sealing plate 27 of the example in that an outer surface 170 of a thin portion 127c is displaced outward in the axial direction (upward in the height direction) as going outward in the radial direction and a gradient of the outer surface 170 is constant. Moreover, the sealing plate 127 is different from the sealing plate 27 of the example in that a gradient change point 171 where the gradient changes relative to the place where the gradient is constant in the outer surface 170 is present in an outer peripheral portion 127b and the gradient change point 171 is positioned more outward in the radial direction than an adjacent portion 159, of the thin portion 127c, that is adjacent to the outer peripheral portion 127b.

The other configurations in the sealing plate 127 are substantially the same as the corresponding configurations in the sealing plate 27. They are the same as those of the sealing plate 27, for example, in that a center portion 127a has a convex portion 155 that protrudes outward in the axial direction (upward in the axial direction) from the end, of the thin portion 127c, that is on the inner side in the radial direction and that an inner surface of the adjacent portion 159 has a curved shape and the inner surface of the adjacent portion 159 is a curved surface 159a. Moreover, the sealing plate 127 is also the same as the sealing plate 27 in that an inner surface 180 of the thin portion 127c connects with the end, of the curved surface 159a, that is on the inner side in the radial direction and that it has an inclined surface 181 that is displaced downward in the axial direction as going inward in the axial direction.

### [Measurement of Inversion Pressure and Ventilation Pressure of Sealing Plate]

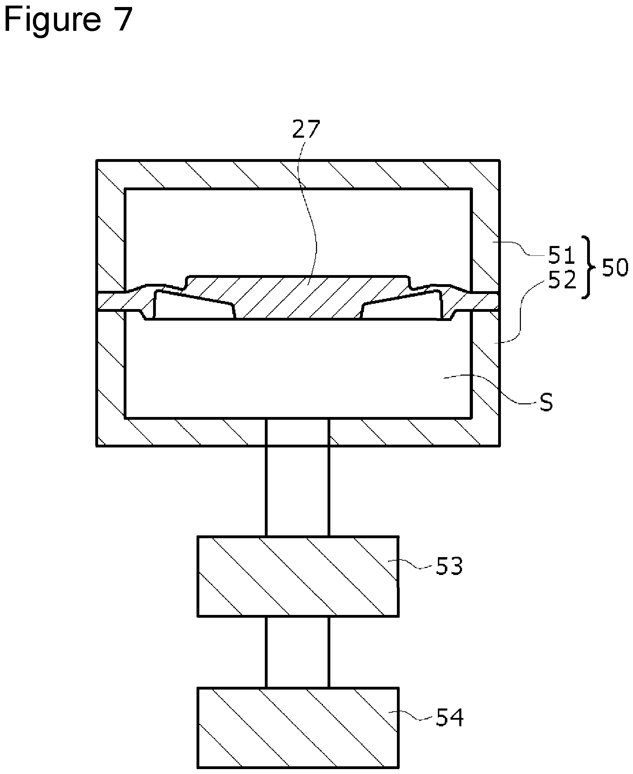

For each of the sealing plates 27 and 127, an inversion pressure and a ventilation pressure were measured using the same apparatus as follows. A measurement method of the inversion pressure and the ventilation pressure of the sealing plate 27 is hereafter described, and description for a measurement method of the inversion pressure and the ventilation pressure of the sealing plate 127 is omitted. As shown in FIG. 7, the sealing plate 27 was fixed to a fixing jig 50 having a pressing portion 51 and a receiving portion 52. The pressing portion 51 and the receiving portion 52 were composed of transparent materials such, for example, as acrylic or reinforced glass. A measurement apparatus being connected to the receiving portion 52, gastightness of a space S enclosed by the sealing plate 27 and the receiving portion 52 was secured by pressurization on the pressing portion 51 from the above with a not-shown air cylinder. Gas was fed to the space S at a constant speed via a regulator 53 from a gas cylinder 54 filled with the gas. Then, inversion and rupturing of the sealing plate 27 were visually examined and pressures in the space S at the time points when the inversion and the rupturing were examined were set as the inversion pressure and the ventilation pressure, respectively. The measurements of the inversion pressure and the ventilation pressure were performed using 20 samples for each of the example and the comparative example.

### [Test Results]

Table 1 presents the test results.

**[Table 1]**

| | Inversion Pressure | Ventilating Pressure |
|---|---|---|
| Sealing Plate of Example | 1.4 MPa to 1.5 MPa | 3.6 MPa to 3.7 MPa |
| Sealing Plate of Comparative Example | 1.3 MPa to 1.6 MPa | 3.6 MPa to 3.9 MPa |

It was able to be examined from the aforementioned test results that for each of the inversion and the rupturing, a variation in operation pressure was smaller with the sealing plate of the example than with the sealing plate of the comparative example. The inventor in the present application considers the cause for the larger variations in inversion pressure and ventilation pressure for the sealing plate of the comparative example than for the sealing plate of the example as follows.

In detail, in the case of the sealing plate 127 of the comparative example, as shown in FIG. 6B, the outer surface 170 is displaced at a constant gradient outward in the axial direction as going outward in the radial direction, and the other portion, on the inner surface 180, other than the adjacent portion 159 are also displaced at a constant gradient inward in the axial direction as going outward in the radial direction. Accordingly, in the periphery of the adjacent portion 159 of the thin portion 127c, a force tends to be exerted in the direction shown with the arrow B in FIG. 6B, that is, in a direction inclined by an acute angle inward in the radial direction toward the upper side in the axial direction, and caused by this, the adjacent portion 159 tends to be hardly bent. Therefore, the inventor in the present application infers that the inversion operation tends to be dominated by randomness and the uncertainty in timing when the inversion and/or the rupturing start is increased, which can cause the high tendency in variations of the inversion pressures and the ventilation pressures.

In contrast, in the case of the sealing plate 27 of the example, as shown in FIG. 5B, the gradient of the outer surface 70 of the thin portion 27c changes such that the thickness of the adjacent portion 59 in the axial direction is small, and thereby, the plane where the opposite surface 70c which is the outer surface of the adjacent portion 59 which is to cause the inversion and the rupturing spreads is to come close to a plane perpendicular to the axial direction. It is inferred that as a result the force in the axial direction shown with the arrow A in FIG. 5B tends to act on the adjacent portion 59 of the thin portion 27c, which can cause variations in inversion pressure and ventilation pressure on the thin portion 27c to be reduced.

### [Essential Configuration of Cylindrical Battery of Present Disclosure and Effects Thereof]

As above, the cylindrical battery 10 of the present disclosure comprises the bottomed tubular exterior can 16 and the sealing assembly 17 closing the opening of the exterior can 16, and the sealing assembly 17 includes the sealing plate 27 which discharges gas inside to the outside by rupturing. Moreover, the sealing plate 27 has the outer peripheral portion 27b at least part of which is crimped and fixed to the opening of the exterior can 16, and the annular thin portion 27c adjacent to the outer peripheral portion 27b, and the thin portion 27c has the inclined portion 56 which is inclined to the bottom side of exterior can 16 in the axial direction as going inward in the radial direction. Moreover, in the thin portion 27c, the inner surface of the adjacent portion 59 which is adjacent to the outer peripheral portion 27b is the curved surface 59a. Further, the gradient of the outer surface 70 of the thin portion 27c in a cross section of the thin portion 27c as cut along a plane including the radial direction and the axial direction changes toward the outer peripheral portion 27b such that the thickness of the adjacent portion 59 is small.

Accordingly, the plane where the opposite surface 70c of the adjacent portion 59 spreads can be made close to a plane that is perpendicular to the axial direction, and the force which the adjacent portion 59 as the rupturing portion receives from gas inside can be made close to a force that is parallel to the axial direction. As a result, there can be reduced a variation in force which the adjacent portion 59 receives from gas inside the battery when abnormal heat generation of the cylindrical battery 10 occurs, and there can be reduced variations in inversion pressure and ventilation pressure.

### [Preferably Employed Configurations for Cylindrical Battery and Effects Thereof]

Moreover, the outer surface 70 may spread in directions substantially perpendicular to the axial direction on the adjacent portion 59. In other words, on the outer surface 70, the opposite surface 70c opposite to the curved surface 59a in the axial direction may spread in directions substantially perpendicular to the axial direction or may be substantially parallel to a plane perpendicular to the axial direction.

According to the aforementioned configuration, the force which the adjacent portion 59 receives from gas inside can be made be a force that is parallel to a substantially axial direction. Accordingly, there can be further readily restrained a variation in force which the adjacent portion 59 receives from gas inside the battery when abnormal heat generation of the cylindrical battery 10 occurs, and there can be further reduced variations in inversion pressure and ventilation pressure.

Moreover, the sealing plate 27 may have, at the center portion in the radial direction, the convex portion 55 protruding outward in the axial direction.

As described in the cross section of TECHNICAL PROBLEM, when in the cylindrical battery of the conventional configuration disclosed in PATENT LITERATURE 1, there is provided the convex portion protruding to the outer side of the battery at the center portion of the sealing plate in the radial direction in order to facilitate electrical connection of the external terminal and the external lead, there arises a concern that the convex portion causes inversion and rupturing of the sealing assembly to hardly occur and variations in inversion pressure and ventilation pressure to be large.

In contrast, since with the cylindrical battery 10 of the present disclosure, the inversion pressure and the ventilation pressure hardly vary, inversion and rupturing of the sealing plate 27 can readily operate at respective desired operation pressures even when there is provided, in the center portion of the sealing plate 27 in the radial direction, the convex portion 55 protruding outward in the axial direction to facilitate electrical connection of the external terminal and the external lead. Accordingly, there can be attained the cylindrical battery 10 capable of not only facilitating electrical connection of the external terminal and the external lead but also reducing variation(s) in inversion pressure and/or ventilation pressure.

Moreover, the top surface 55a of the convex portion 55 may be positioned more on the outer side in the axial direction than the shoulder portion 33 of the exterior can 16.

According to the aforementioned configuration, the exterior can 16 is hardly an obstacle when the top surface 55a of the convex portion 55 constituting an external terminal is electrically connected to an external lead, which enables the top surface 55a of the convex portion 55 to be connected to the external lead further smoothly.

Notably, the present disclosure is not limited to the aforementioned embodiment and its modifications but various improvements and alterations thereof may occur without departing from the matters disclosed in the claims of the present application or their equivalents.

For example, there has been described as to the aforementioned embodiment a case where the opposite surface 70c of the adjacent portion 59 spreads substantially parallel to a plane that is perpendicular to the axial direction. Nevertheless, the opposite surface as the outer surface of the adjacent portion does not have to spread substantially parallel to the plane perpendicular to the axial direction but, for example, may be an inclined surface that is inclined relative to the plane perpendicular to the axial direction outward in the axial direction as going outward in the radial direction.

Moreover, there has been described a case where the sealing plate 27 has, in the center portion in the radial direction, the convex portion 55 protruding outward in the axial direction and the top surface 55a of the convex portion 55 is positioned more on the outer side in the axial direction than the shoulder portion 33 of the exterior can 16. Nevertheless, the top surface of the convex portion protruding outward in the axial direction in the center portion of the sealing plate in the radial direction may be positioned more on the electrode assembly side in the axial direction than the place that is positioned most outward in the axial direction within the shoulder portion of the exterior can. Otherwise, the sealing plate does not have to have a convex portion protruding outward in the axial direction.

Moreover, there has been described a case where the outer surface 70 of the thin portion 27c in a cross section of the thin portion 27c as cut along a plane including the radial direction and the axial direction has a shape of connected lines that changes the gradient of itself solely at a single place (outer end 71). Nevertheless, the shape of the outer surface of the thin portion in a cross section of the thin portion as cut along a plane including the radial direction and the axial direction may be any shape as long as it is a shape that changes the gradient of the outer surface such that the thickness of the adjacent portion is small.

For example, the outer surface of the thin portion in a cross section of the thin portion as cut along a plane including the radial direction and the axial direction may have a shape of connected lines that changes the gradient of itself at a plurality of places, employing a configuration in which the gradient of the outer surface is gradually inclined to the inner surface side of the thin portion in a plurality of stages as the outer surface is going outward in the radial direction. Otherwise, the outer surface of the thin portion in a cross section of the thin portion as cut along a plane including the radial direction and the axial direction may include a curved line, having a shape in which the gradient of the tangential line to the curved line is gradually inclined to the inner surface side of the thin portion as going to the adjacent portion side of the thin portion.

### REFERENCE SIGNS LIST

10 cylindrical battery, 11 positive electrode, 12 negative electrode, 13 separator, 14 electrode assembly, 15 battery case, 16 exterior can, 17 sealing assembly, 20 positive electrode lead, 21 negative electrode lead, 23 terminal plate, 25 insulating plate, 27 sealing plate, 27a center portion, 27b an outer periphery, 27c thin portion, 28 gasket, 30 bottomed tubular portion, 33 shoulder portion, 50 fixing jig, 51 pressing portion, 52 receiving portion, 53 regulator, 54 gas cylinder, 55 convex portion, 55a top surface of the convex portion, 56 inclined portion, 59 adjacent portion, 59a curved surface, 70 outer surface of the thin portion, 70a conical inner peripheral surface, 70b flat surface, 70c opposite surface

## Claims

1. A cylindrical battery, comprising:
a bottomed tubular exterior can; and
a sealing assembly closing an opening of the exterior can, wherein
the sealing assembly includes a sealing plate that discharges gas inside to an outside by rupturing,
the sealing plate has: an outer peripheral portion at least part of which is crimped and fixed to the opening of the exterior can; and an annular thin portion adjacent to the outer peripheral portion,
the thin portion has an inclined portion that is inclined to a bottom side of the exterior can in an axial direction as going inward in a radial direction, and
in a cross section of the thin portion as cut along a plane including the radial direction and the axial direction, an inner surface of an adjacent portion, of the thin portion, that is adjacent to the outer peripheral portion has a curved shape, and a gradient of an outer surface of the thin portion changes toward the outer peripheral portion such that a thickness of the adjacent portion is small.

2. The cylindrical battery according to claim 1, wherein the outer surface spreads in the adjacent portion in a direction substantially perpendicular to the axial direction.

3. The cylindrical battery according to claim 1 or 2, wherein the sealing plate has, in a center portion in the radial direction, a convex portion protruding outward in the axial direction.

4. The cylindrical battery according to claim 3, wherein a top surface of the convex portion is positioned more outward in the axial direction than a shoulder portion of the exterior can.
